(19) **Europäisches Patentamt**
**European Patent Office**
**Office européen des brevets**

(11) **EP 2 085 686 B1**

(12) **EUROPÄISCHE PATENTSCHRIFT**

(45) Veröffentlichungstag und Bekanntmachung des Hinweises auf die Patenterteilung:
**04.05.2011 Patentblatt 2011/18**

(51) Int Cl.:
*F21S 8/10* *(2006.01)*     *H05B 33/08* *(2006.01)*
*B60Q 1/14* *(2006.01)*

(21) Anmeldenummer: **09160785.3**

(22) Anmeldetag: **30.11.2005**

(54) **Kfz-Scheinwerferelement**

Motor vehicle headlight element

Elément de phare automobile

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **17.12.2004 DE 102004060890**

(43) Veröffentlichungstag der Anmeldung:
**05.08.2009 Patentblatt 2009/32**

(62) Dokumentnummer(n) der früheren Anmeldung(en) nach Art. 76 EPÜ:
**05821310.9 / 1 825 188**

(73) Patentinhaber:
• **OSRAM Opto Semiconductors GmbH**
**93055 Regensburg (DE)**
• **Osram Gesellschaft mit beschränkter Haftung**
**81543 München (DE)**

(72) Erfinder:
• **Behr, Gerhard**
**89174 Altheim/Alb (DE)**
• **Biebl, Alois**
**93358 Train - St. Johann (DE)**
• **Engl, Moritz**
**93055 Regensburg (DE)**

• **Haas, Heinz**
**93059 Regensburg (DE)**
• **Hackenbuchner, Stefan**
**80687 München (DE)**
• **Hirschmann, Günther**
**81735 München (DE)**
• **Hofmann, Markus**
**93077 Bad Abbach (DE)**
• **Huber, Rainer**
**93080 Pentling (DE)**
• **Reill, Joachim**
**93197 Zeitlarn (DE)**
• **Reiners, Thomas**
**89429 Bachhagel (DE)**
• **Vollmer, Ralf**
**89075 Ulm (DE)**
• **Helbig, Peter**
**89567 Sontheim an der Brenz (DE)**

(74) Vertreter: **Epping - Hermann - Fischer**
**Patentanwaltsgesellschaft mbH**
**Ridlerstrasse 55**
**80339 München (DE)**

(56) Entgegenhaltungen:
**EP-A- 1 298 007      WO-A-98/12757**
**DE-A1- 10 313 246     US-A1- 2004 178 737**
**US-A1- 2004 233 678    US-B1- 6 371 636**

**Beschreibung**

Die Erfindung betrifft ein Kfz-Scheinwerferelement.

Die Druckschriften WO 01/01037A1 und WO 01/01038A1 beschreiben einen Kfz-Scheinwerfer.

In der Druckschrift EP 1 298 007 A2 ist eine integrierte Licht- und Anbauanordnung angegeben.

Eine Kfz-Lampe ist in der Druckschrift US 2004/0178737 A1 und in der Druckschrift US 2004/0233678 A1 offenbart.

Die Druckschrift US 6,371,636 B1 betrifft ein LED-Lichtmodul für Fahrzeuge.

In der Druckschrift DE 103 13 246 A1 ist ein Kraftfahrzeugleuchtenmodul gezeigt.

Eine wellenlängenkonvertierende Vergussmasse ist in der Druckschrift WO 98/12757 A1 beschrieben.

Es ist Aufgabe der vorliegenden Erfindung, ein Kfz-Scheinwerferelement mit einer besonders hohen Lebensdauer anzugeben.

Es wird ein Kfz-Scheinwerferelement angegeben.

Das Kfz-Scheinwerferelement ist beispielsweise geeignet, als Licht erzeugendes Element in einem Kfz-Frontscheinwerfer zu fungieren. Dabei können mehrere gleichartige Kfz-Scheinwerferelemente in einem Frontscheinwerfer angeordnet sein. Zudem ist es möglich, dass zusätzlich zum Kfz-Scheinwerferelement auch andere Licht erzeugende Bauelemente wie beispielsweise Halogen- oder Gasentladungslampen in Kfz-Scheinwerferelement enthalten sind.

Es enthält das Kfz-Scheinwerferelement wenigstens eine Leuchtdiode. Die Leuchtdiode enthält wenigstens einen Leuchtdiodenchip, bevorzugt enthält die Leuchtdiode mehrere Leuchtdiodenchips. Ferner ist das Kfz-Scheinwerferelement geeignet, weißes Licht zu emittieren.

Es enthält das Kfz-Scheinwerferelement eine Steuervorrichtung. Die Steuervorrichtung ist geeignet, ein von einer Messgröße abhängiges Signal zu verarbeiten.

Bei der Messgröße kann es sich beispielsweise um eine Temperatur, die Intensität, mit der die Leuchtdiode des Kfz-Scheinwerferelements elektromagnetische Strahlung emittiert, die Umgebungshelligkeit außerhalb des Scheinwerferelements, der Strom, der durch die Leuchtdiode fließt, oder Ähnliches handeln. Die Messgröße wird von einem Detektor detektiert und in ein elektrisches Signal umgewandelt. Die Steuervorrichtung ist geeignet, das elektrische Signal, das abhängig von der Messgröße erzeugt worden ist, zu verarbeiten und einen entsprechenden Strom in die Leuchtdiode einzuprägen. Das heißt, die Steuervorrichtung regelt den Strom, der durch die Leuchtdiode fließt, abhängig von wenigstens einer physikalischen Messgröße. Die Steuervorrichtung kann beispielsweise einen Mikroprozessor enthalten.

Es sind die Steuervorrichtung und alle Leuchtdioden auf einem gemeinsamen Träger angeordnet. Beispielsweise handelt es sich bei dem Träger um eine Leiterplatte. Das heißt, auf dem Träger sind elektrische Anschlussstellen angeordnet, mittels derer beispielsweise die Steuervorrichtung von außen elektrisch kontaktiert werden kann. Weiter weist der Träger bevorzugt elektrische Leiterbahnen auf, die geeignet sind, die Anschlussstellen und die Steuervorrichtung sowie die Steuervorrichtung und die Leuchtdiode miteinander elektrisch zu verbinden. Bevorzugt dient der Träger zudem als Wärmeleitelement und ist geeignet, die von der Leuchtdiode im Betrieb erzeugte Wärme beispielsweise an einen Kühlkörper abzugeben, auf dem der Träger montiert ist. Gemäß zumindest einer Ausführungsform des Kfz-Scheinwerferelements weist das Kfz-Scheinwerferelement also wenigstens eine Leuchtdiode auf.

Die Steuervorrichtung ist geeignet, ein von einer Messgröße abhängiges Signal zu verarbeiten und einen Strom entsprechend dem Signal in die Leuchtdiode einzuprägen, wobei Steuervorrichtung und Leuchtdiode auf dem gemeinsamen Träger angeordnet sind.

Gemäß zumindest einer Ausführungsform des Kfz-Scheinwerferelements ist die Steuervorrichtung geeignet, den Strom durch die Leuchtdiode abhängig vom Spannungsabfall an einem Widerstand zu ermitteln. Dazu ist der Leuchtdiode ein Shunt-Widerstand in Reihe geschaltet. Der Widerstand ist bevorzugt auf dem Träger angeordnet. Mit Hilfe des Spannungsabfalls am bekannten Widerstand ist die Steuervorrichtung geeignet, den Strom durch die Leuchtdiode zu ermitteln. Der so ermittelte Ist-Wert kann von der Steuervorrichtung mit einem Soll-Stromwert verglichen werden. Die Steuervorrichtung ist dann geeignet, den Strom durch die Leuchtdiode derart nachzuregeln, dass sich der Strom durch die Leuchtdiode dem Soll-Stromwert zumindest annähert.

Der Soll-Stromwert kann dazu beispielsweise von außerhalb des Kfz-Scheinwerferelements vorgegeben sein. Dazu ist von außen ein entsprechendes Signal in die Steuervorrichtung eingekoppelt. Beispielsweise ist das Signal mittels eines Anschlussstifts, mit dem die Steuervorrichtung leitend verbunden ist, in die Steuervorrichtung eingekoppelt. Bevorzugt ist der Anschlussstift dazu auf dem Träger angeordnet.

Der Soll-Strom kann bevorzugt kontinuierlich variierbar sein. Auf diese Weise ist beispielsweise ein stufenloses Dimmen der Leuchtdiode mittels Variation des Soll-Stromwerts möglich.

Gemäß zumindest einer Ausführungsform des Kfz-Scheinwerferelements ist dieses geeignet, den Strom durch die Leuchtdiode abhängig vom Signal eines Temperatursensors einzuprägen. Bevorzugt ist die Steuervorrichtung zudem geeignet, einen Steuerstrom zum Betreiben des Temperatursensors bereitzustellen.

Der Temperatursensor erzeugt ein elektrisches Signal, abhängig von der Temperatur der Leuchtdiode. Übersteigt die Temperatur der Leuchtdiode beispielsweise einen vorgegebenen Maximalwert, so ist die Steuervorrichtung geeignet, den Strom durch die Leuchtdiode zu reduzieren. Weiter ist die Steuervorrichtung geeignet, bei Erreichen oder Überschreiten des Maximalwerts ein entsprechendes Fehlersignal zu erzeugen. Das Fehlersignal kann beispielsweise mittels eines Anschlussstifts nach außen geleitet werden.

Gemäß zumindest einer Ausführungsform des Kfz-Scheinwerferelements ist der Temperatursensor thermisch an die Leuchtdiode gekoppelt. Das heißt, zumindest ein Teil der Wärme, die im Betrieb von der Leuchtdiode erzeugt wird, wird mittels thermischer Kopplung von der Leuchtdiode zum Temperatursensor geleitet. Beispielsweise kann es sich bei der thermischen Kopplung um Wärmeleitung, Wärmestrahlung oder Konvektion handeln. Der Temperatursensor ist z. B. durch eines der folgenden Bauelement gegeben: NTC-Widerstand, PTC-Widerstand, Infrarot-Temperatursensor, Diode. Bei Verwendung einer Diode als Temperatursensor kann die Temperatur beispielsweise mittels der Temperaturabhängigkeit der Fluss-Spannung der Diode ermittelt werden.

Gemäß zumindest einer Ausführungsform des Kfz-Scheinwerferelements ist der Temperatursensor auf dem Träger angeordnet. Handelt es sich bei dem Träger um eine Leiterplatte, so kann der Temperatursensor mittels Leiterbahnen der Leiterplatte mit der Steuervorrichtung verbunden sein. Zum einen kann auf diese Weise das vom Temperatursensor erzeugte Signal an die Steuervorrichtung weitergeleitet werden, zum anderen kann der Temperatursensor von der Steuervorrichtung mit einem Steuerstrom versorgt werden.

Gemäß zumindest einer Ausführungsform des Kfz-Scheinwerferelements ist die Steuervorrichtung geeignet, den Strom durch die Leuchtdiode abhängig vom Signal eines Photodetektors einzuprägen.

Bevorzugt ist die Steuervorrichtung dabei geeignet, einen Steuerstrom zum Betreiben des Photodetektors bereitzustellen. Bei dem Photodetektor kann es sich beispielsweise um eine Photodiode oder einen Phototransistor handeln.

Gemäß zumindest einer Ausführungsform des Kfz-Scheinwerferelements ist der Photodetektor geeignet, im Wesentlichen die von der Leuchtdiode abgegebene elektromagnetische Strahlung zu detektieren. Im Wesentlichen die von der Leuchtdiode abgegebene elektromagnetische Strahlung bedeutet dabei, dass beispielsweise auch kleine Mengen Streulichts von außerhalb des Kfz-Scheinwerferelements auf den Photodetektor treffen können. Der Photodetektor ist aber bevorzugt derart positioniert, dass er vor allem die von der Leuchtdiode des Kfz-Scheinwerferelements abgegebene elektromagnetische Strahlung detektiert.

Zum Beispiel lässt sich mittels der vom Photodetektor gemessenen Intensität bestimmen, ob alle Leuchtdioden des Kfz-Scheinwerferelements funktionstätig sind. Auch lässt sich mittels des Photodetektors ermitteln, ob die Strahlungsintensität einer Leuchtdiode aufgrund beispielsweise von Alterungserscheinungen abgenommen hat. Der Strom durch die Leuchtdiode kann dann von der Steuervorrichtung entsprechend erhöht werden. Ist eine Leuchtdiode ausgefallen oder hat die Intensität der von der Leuchtdiode abgegebenen elektromagnetischen Strahlung aufgrund von Alterungserscheinungen zu stark abgenommen, so ist die Steuervorrichtung geeignet, ein Fehlersignal zu erzeugen. Beispielsweise mittels eines Anschlussstifts kann das Fehlersignal nach außen abgegeben werden. Bevorzugt ist der Anschlussstift dazu auf dem Träger angeordnet.

Gemäß zumindest einer Ausführungsform des Kfz-Scheinwerferelements ist der Photodetektor auf dem Träger angeordnet. Handelt es sich bei dem Träger um eine Leiterplatte, so kann der Photodetektor über die vorhandenen Leiterbahnen der Leiterplatte zur Signalweitergabe und zur Versorgung des Photodetektors mit einem Steuerstrom mit der Steuervorrichtung verbunden sein.

Gemäß zumindest einer Ausführungsform des Kfz-Scheinwerferelements ist der Photodetektor geeignet, im Wesentlichen die Umgebungshelligkeit zu detektieren. Im Wesentlichen die Umgebungshelligkeit bedeutet dabei, dass der Photodetektor derart angeordnet ist, dass er vor allem Licht von außerhalb des Scheinwerferelements detektiert. Höchstens ein kleiner Teil Streulichts vom Kfz-Scheinwerferelement trifft auf den Photodetektor. Beispielsweise ermöglicht ein solcher externer Photodetektor, dass ein Strom durch die Leuchtdiode abhängig von den äußeren Lichtverhältnissen eingeprägt werden kann. So kann beispielsweise bei Abnahme der Umgebungshelligkeit - z. B. bei Fahrt durch einen Tunnel - die Stromstärke durch die Leuchtdiode erhöht werden. Bei Zunahme der Umgebungshelligkeit kann die Stromstärke dann wieder reduziert werden.

Das vom Photodetektor erzeugte elektrische Signal kann beispielsweise mittels eines Anschlussstifts der Steuervorrichtung zugeführt werden. Bevorzugt ist der Anschlussstift dazu auf dem Träger angeordnet. Handelt es sich bei dem Träger um eine Leiterplatte, so ist der Anschlussstift mittels Leiterbahnen der Leiterplatte mit der Steuervorrichtung verbunden.

Bevorzugt weist das Kfz-Scheinwerferelement sowohl einen Photodetektor außerhalb des Scheinwerferelements zur Detektion der Umgebungshelligkeit als auch einen internen Photodetektor zur Bestimmung der Intensität der von der Leuchtdiode emittierten elektromagnetischen Strahlung auf.

Gemäß zumindest einer Ausführungsform des Kfz-Scheinwerferelements ist der externe Photodetektor außerhalb des Scheinwerfers beispielsweise an der Karosserie des Kfz angeordnet.

Gemäß zumindest einer Ausführungsform des Kfz-Scheinwerferelements ist zumindest ein Varistor auf dem Träger angeordnet. Der Varistor dient beispielsweise als Schutz der Bauelemente des Kfz-Scheinwerferelements vor Überspannungen. Beispielsweise stellt der Varistor einen Schutz gegen ESD (electrostatical discharge) Spannungspulse dar.

Gemäß wenigstens einer Ausführungsform des Kfz-Scheinwerferelements ist zumindest ein Varistor der Leuchtdiode parallel geschaltet. Der Varistor dient dann als ESD-Schutz für die Leuchtdiode in Sperrrichtung.

Gemäß wenigstens einer Ausführungsform des Kfz-Scheinwerferelements ist zumindest ein Pi-Filter auf dem Träger angeordnet. Der Pi-Filter dient beispielsweise zur Funkenentstörung.

Gemäß zumindest einer Ausführungsform des Kfz-Scheinwerferelements ist eine Pulsweitenmodulationsschaltung auf dem Träger angeordnet. Bevorzugt ist die Pulsweitenmodulationsschaltung geeignet, die Leuchtdiode zu dimmen. Die Pulsweitenmodulationsschaltung erzeugt z. B. für ein bestimmtes Zeitintervall $T_1$ Strom einer bestimmten Stärke $I_1$. Für ein bestimmtes Zeitintervall $T_2$ fließt kein Strom durch die Leuchtdiode ($I_2=0$). Beispielsweise erzeugt die Pulsweitenmodulation dazu ein elektrisches Rechtecksignal. Je größer das Tastverhältnis $T_1/(T_1+T_2)$ ist, desto länger fließt im Zeitintervall $T_1+T_2$ Strom durch die Leuchtdiode und desto heller erscheint die Leuchtdiode dem menschlichen Benutzer.

Die Frequenz der Pulsweitenmodulationsschaltung $1/(T_1+T_2)$ beträgt bevorzugt wenigstens 100 Hz, sodass dem menschlichen Betrachter aufgrund der Trägheit der optischen Signalverarbeitung beim Menschen die Leuchtdiode als kontinuierlich leuchtend erscheint.

Gemäß zumindest einer Ausführungsform des Kfz-Scheinwerferelements ist die Steuervorrichtung geeignet, das Tastverhältnis der Pulsweitenmodulationsschaltung einzustellen. Zum Beispiel kann dann aufgrund eines äußeren Signals, das der Steuervorrichtung zugeführt wird, ein bestimmtes Tastverhältnis von der Steuervorrichtung der Pulsweitenmodulationsschaltung vorgegeben sein. Auf diese Weise ist die Leuchtdiode bevorzugt stufenlos dimmbar.

Gemäß zumindest einer Ausführungsform des Kfz-Scheinwerferelements kann eine stromgeregelte Spannungsversorgung auf dem Träger angeordnet sein. Beispielsweise kann es sich bei der Spannungsversorgung um einen Hochsetz-/Tiefsetz-Steller handeln. Ein solcher DC-DC-Wandler ist bevorzugt geeignet, eine externe Eingangsspannung in eine Spannung umzuwandeln, die zum Betreiben der Leuchtdiode geeignet ist. Zum Beispiel kann die Eingangsspannung zwischen 6 und 16 V betragen

Die Leuchtdiode kann zum Beispiel mit einer Spannung zwischen 1 und 5 V pro Leuchtdiodenchip betrieben werden. Bevorzugt wird die Leuchtdiode mit einer Spannung von circa 3,3 V pro Leuchtdiodenchip betrieben. Bei einer Leuchtdiode mit beispielsweise fünf Leuchtdiodenchips, die in Reihe zueinander geschaltet sind, liegt dann eine Spannung von circa 17 V an der Leuchtdiode an.

Alternativ oder zusätzlich zu einem Hochsetz-/Tiefsetz-Steller kann auch ein Sperrwandler auf dem Träger angeordnet sein.

Gemäß zumindest einer Ausführungsform ist die Steuervorrichtung geeignet, ein Tastverhältnis des DC-DC-Wandlers einzustellen. Beispielsweise ist damit abhängig von einem äußeren Signal, das der Steuervorrichtung zugeführt ist, die Leuchtdiode stufenlos dimmbar.

Gemäß zumindest einer Ausführungsform des Kfz-Scheinwerferelements ist auf dem Träger wenigstens ein Anschlussstift angeordnet. Handelt es sich bei dem Träger um eine Leiterplatte, so ist der Anschlussstift bevorzugt über Leiterbahnen der Leiterplatte mit der Steuervorrichtung verbunden.

Gemäß zumindest einer Ausführungsform ist mittels wenigstens eines Anschlussstifts ein externes elektrisches Signal in die Steuervorrichtung eingekoppelt.

Beispielsweise ist mittels eines Anschlussstifts ein Signal in die Steuervorrichtung eingekoppelt, das einen Soll-Stromwert für die Stromstärke, die durch die Leuchtdioden fließt, vorgibt.

Weiter kann mittels eines Anschlussstifts ein Signal in die Steuervorrichtung eingekoppelt sein, das von einem externen Detektor - beispielsweise von einem Photodetektor - erzeugt ist.

Ferner kann über einen Anschlussstift ein Schaltsignal in die Steuervorrichtung eingekoppelt sein. Mittels des Schaltsignals kann die Leuchtdiode des Scheinwerferelements über die Steuervorrichtung ein- und ausgeschaltet werden, d. h. abhängig vom Schaltsignal wird die Leuchtdiode von der Steuervorrichtung bestromt oder nicht bestromt.

Außerdem kann zumindest ein Anschlussstift auf dem Träger angeordnet sein, an dem eine Versorgungsspannung zum Betrieb des Kfz-Scheinwerferelements anliegt. Dabei kann es sich um eine Gleichspannung oder eine Wechselspannung handeln. Liegt am Anschlussstift eine Wechselspannung an, so ist auf dem Träger bevorzugt ein Gleichrichterelement angeordnet, das geeignet ist, die Wechselspannung in für den Betrieb der Leuchtdiode und der Steuervorrichtung geeignete Gleichspannung umzuwandeln.

Bevorzugt ist wenigstens ein Anschlussstift für eingehende Signale TTL-kompatibel.

Weiter können Anschlussstifte auf dem Träger angeordnet sein, die geeignet sind, ein von der Steuervorrichtung erzeugtes Signal nach außen zu leiten. So kann bei Auftreten eines Fehlers, wie beispielsweise dem Ausfall einer Leuchtdiode oder dem Überhitzen einer Leuchtdiode, ein entsprechendes Signal einem Anschlussstift beaufschlagt sein.

Bevorzugt sind alle auf dem Träger angeordneten Anschlussstifte jeweils mittels eines Varistors ESD-geschützt. Besonders bevorzugt sind die Anschlussstifte für eine Busankopplung geeignet.

Die Leuchtdiodenchips der Leuchtdiode können zum Beispiel parallel oder in Reihe geschaltet sein.

Bevorzugt ist dem Leuchtdiodenchip eine Leuchtdiodenoptik nachgeordnet. Besonders bevorzugt weist die Leuchtdiode mehrere Leuchtdiodenchips auf, denen eine gemeinsame Leuchtdiodenoptik nachgeordnet ist. Die Leuchtdiodenoptik ist vorzugsweise derart zu den Leuchtdiodenchips positioniert, dass ein Großteil der von den Leuchtdiodenchips emittierten elektromagnetischen Strahlung von der Leuchtdiodenoptik beeinflusst wird. Die Leuchtdiodenoptik enthält bevorzugt wenigstens eines der folgenden optischen Elemente: refraktive Optik, diffraktive Optik, reflektive Optik, Faseroptik.

Gemäß zumindest einer Ausführungsform des Kfz-Scheinwerferelements ist die Leuchtdiodenoptik geeignet, die Divergenz des vom Leuchtdiodenchip emittierten Lichts zu verringern. Das heißt, das von den Leuchtdiodenchips emittierte Licht wird beispielsweise bei Durchtritt durch die Leuchtdiodenoptik derart beeinflusst, dass seine Divergenz nach dem Austritt geringer ist als vor dem Eintritt in die Leuchtdiodenoptik.

In zumindest einer Ausführungsform des Kfz-Scheinwerferelements ist die Leuchtdiodenoptik ein nicht abbildender optischer Konzentrator. Dabei ist die Leuchtdiodenoptik bevorzugt derart der Strahlungsauskoppelfläche wenigstens eines Leuchtdiodenchips nachgeordnet, dass die Strahlungseintrittsöffnung des optischen Elements die eigentliche Strahlungsaustrittsöffnung des Konzentrators ist. Auf diese Weise verlässt durch die Strahlungseintrittsöffnung in die Leuchtdiodenoptik tretende elektromagnetische Strahlung den Konzentrator mit verringerter Divergenz durch die Strahlungsaustrittsöffnung.

Die Leuchtdiodenoptik kann zumindest teilweise nach Art eines der folgenden optischen Elemente gebildet sein: zusammengesetzter parabolischer Konzentrator (CPC - Compound Parabolic Concentrator), zusammengesetzter elliptischer Konzentrator (CEC - Compound Ellyptic Concentrator), zusammengesetzter hyperbolischer Konzentrator (CHC - Compound Hyperbolic Concentrator).

Die Leuchtdiodenoptik kann reflektierende Seitenwände aufweisen, die geeignet sind, zumindest einen Teil der vom Leuchtdiodenchip emittierten elektromagnetischen Strahlung zu reflektieren. Die Seitenwände sind dann zumindest teilweise nach Art eines der oben genannten optischen Elemente gebildet.

Gemäß wenigstens einer Ausführungsform des Kfz-Scheinwerferelements weist der nicht abbildende optische Konzentrator Seitenwände auf, die die Strahlungseintrittsöffnung mit der Strahlungsaustrittsöffnung der Leuchtdiodenoptik verbinden und dabei derart ausgebildet sind, dass auf den Seitenwänden verlaufende Verbindungslinien zwischen der Strahlungseintrittsöffnung und der Strahlungsaustrittsöffnung im Wesentlichen gerade verlaufen. Die Seitenwände bilden dabei beispielsweise die Form eines Pyramiden- oder Kegelstumpfes.

Die Leuchtdiodenoptik kann ein aus einem dielektrischen Material bestehender Vollkörper sein. Die durch die Strahlungseintrittsöffnung in die Leuchtdiodenoptik tretende elektromagnetische Strahlung wird dann bevorzugt an den seitlichen Grenzflächen des Vollkörpers zum umgebenden Medium total reflektiert. Die Leuchtdiodenoptik kann aber auch durch einen Hohlkörper gebildet sein, dessen Innenwände reflektierend beschichtet sind.

In wenigstens einer Ausführungsform des Kfz-Scheinwerferelements ist jedem Leuchtdiodenchip genau eine Leuchtdiodenoptik zugeordnet. Die Strahlungseintrittsöffnung des optischen Elements ist dabei bevorzugt der Strahlungsauskoppelfläche des Leuchtdiodenchips in einer Hauptabstrahlrichtung des Leuchtdiodenchips nachgeordnet.

Es ist aber auch möglich, dass mehrere Leuchtdiodenchips einer gemeinsamen Leuchtdiodenoptik zugeordnet sind. Die Leuchtdiodenchips können dazu beispielsweise entlang wenigstens einer Geraden angeordnet sein. Die Strahlungseintrittsöffnung des optischen Elements ist dann der Gesamtfläche der Strahlungsauskoppelflächen der einzelnen Leuchtdiodenchips in einer Hauptabstrahlrichtung der Leuchtdiodenchips nachgeordnet.

Gemäß wenigstens einer Ausführungsform weist die Strahlungseintrittsöffnung der Leuchtdiodenoptik eine Querschnittfläche auf, die maximal zwei Mal so groß ist wie die Gesamtstrahlungsauskoppelfläche der dem optischen Element zugeordneten Leuchtdiodenchips. Die Gesamtstrahlungsauskoppelfläche ist durch die Summe der Strahlungsauskoppelflächen der einzelnen der Leuchtdiodenoptik zugeordneten Leuchtdiodenchips gegeben. Bevorzugt ist die Fläche der Strahlungseintrittsöffnung maximal 1,5, besonders bevorzugt maximal 1,25 Mal so groß wie die Gesamtstrahlungsauskoppelfläche der der Leuchtdiodenoptik zugeordneten Leuchtdiodenchips.

Eine derart kleine Strahlungseintrittsöffnung erlaubt es, den Raumwinkel, in den die elektromagnetische Strahlung emittiert wird, möglichst nahe an der Strahlungsauskoppelfläche des Leuchtdiodenchips zu verkleinern. Dort ist die Querschnittsfläche des vom Leuchtdiodenchip emittierten Strahlenkegels besonders klein. Dies ermöglicht die Konstruktion von Bauelementen mit optimiertem Etendue. Das heißt, eine möglichst hohe Strahlungsstärke wird auf eine möglichst kleine Fläche projiziert. Das Etendue ist eine Erhaltungsgröße der Optik. Es ist durch das Produkt aus Flächeninhalt einer Lichtquelle und Raumwinkel, in den die Lichtquelle abstrahlt, gebildet.

In wenigstens einer Ausführungsform des Kfz-Scheinwerferelements ist zwischen der Strahlungsauskoppelfläche des Leuchtdiodenchips und der Strahlungseintrittsöffnung der Leuchtdiodenoptik ein Spalt, beispielsweise ein Luftspalt, angeordnet.

Dadurch ist erreicht, dass besonders divergente Strahlung nicht in die Leuchtdiodenoptik gelangt, sondern durch den Spalt vor dem Eintritt in die Leuchtdiodenoptik seitlich austreten kann. Damit lässt sich die Divergenz der vom optischen Element emittierten elektromagnetischen Strahlung weiter verringern.

Anstelle eines Spalts ist es zudem möglich, dass beispielsweise Seitenwände, die der Strahlungsauskoppelfläche des Leuchtdiodenchips nachgeordnet sind, nahe an der Strahlungseintrittsöffnung des optischen Elements absorbierend oder für elektromagnetische Strahlung transparent ausgebildet sind. Auf diese Weise kann erreicht sein, dass der hoch divergente Anteil der vom Leuchtdiodenchip emittierten elektromagnetischen Strahlung nicht in das optische Element tritt.

Gemäß wenigstens einer Ausführungsform des Kfz-Scheinwerferelements ist der Strahlungsaustrittsöffnung des optischen Elements ein zusätzliches optisches Element in Hauptabstrahlrichtung nachgeordnet. Bei dem zusätzlichen optischen Element handelt es sich bevorzugt um eine Licht brechende oder Licht beugende Optik, mit der eine weitere Verringerung der Divergenz der durch das zusätzliche optische Element tretenden Strahlung erreicht werden kann.

Bevorzugt verringert die Leuchtdiodenoptik die Divergenz eines durch die Strahlungseintrittsöffnung tretenden Strahlkegels zumindest in einer Raumrichtung derart, dass der Strahlkegel beim Austritt durch die Strahlungsaustrittsöffnung einen Öffnungswinkel zwischen 0 und 70°, bevorzugt zwischen 0 und 30°, besonders bevorzugt zwischen 0 und 10° zu einer Längsmittelachse des optischen Elements aufweist, die senkrecht auf der Strahlungsauskoppelfläche eines der Leuchtdiodenoptik zugeordneten Leuchtdiodenchips steht.

Es weist die Leuchtdiode außerdem ein Lumineszenz-Konversionsmaterial auf, das der Strahlungsauskoppelfläche wenigstens einer der Leuchtdiodenchips nachgeordnet ist. Bevorzugt ist ein Lumineszenz-Konversionsmaterial der Strahlungsauskoppelfläche eines jeden Leuchtdiodenchips dem Kfz-Scheinwerferelement nachgeordnet.

Das Lumineszenz-Konversionsmaterial ist geeignet, wenigstens einen Teil der vom Leuchtdiodenchip ausgesandten elektromagnetischen Strahlung Wellenlängen zu konvertieren. Es mischt sich die vom Leuchtdiodenchip emittierte Strahlung mit dem wellenlängenkonvertierten Anteil zu weißem Licht.

Es ist aber auch möglich, dass die vom Leuchtdiodenchip emittierte elektromagnetische Strahlung im Wesentlichen vollständig durch das Lumineszenz-Konversionsmaterial wellenlängenkonvertiert wird. Beispielsweise kann auf diese Weise vom Leuchtdiodenchip emittierte Strahlung im nicht sichtbaren Spektralbereich zu Strahlung im sichtbaren Spektralbereich umgewandelt werden. Durch Verwendung von beispielsweise zwei verschiedenen Leuchtstoffen im Lumineszenz-Konversionsmaterial kann dann durch Lichtmischung z. B. weißes Licht erzeugt werden. Geeignete Leuchtstoffe zur Wellenlängenkonvertierung sind beispielsweise in der Druckschrift WO 98/12757 beschrieben, deren Offenbarungsgehalt, die Leuchtstoffe betreffend, hiermit durch Rückbezug aufgenommen wird.

Das Lumineszenz-Konversionsmaterial kann in wenigstens einer Ausführungsform des Kfz-Scheinwerferelements einer zumindest teilweise strahlungsdurchlässigen Vergussmasse beigemischt sein. Bevorzugt umgibt die Vergussmasse den Leuchtdiodenchip zumindest teilweise. Die Vergussmasse kann beispielsweise Epoxid- oder Silikon-Materialien enthalten.

Das Lumineszenz-Konversionsmaterial kann jedoch auch als dünne Schicht direkt auf die Strahlungsauskoppelfläche der einzelnen Leuchtdiodenchips aufgebracht sein.

Zudem ist es möglich, dass das Lumineszenz-Konversionsmaterial zumindest stellenweise in der Leuchtdiodenoptik enthalten ist. So kann das Lumineszenz-Konversionsmaterial etwa als dünne Schicht auf Seitenwände, die der Strahlungsauskoppelfläche des Leuchtdiodenchips nachgeordnet sind, aufgebracht sein. Das Lumineszenz-Konversionsmaterial kann homogen auf den Seitenwänden verteilt sein. Es ist aber auch möglich, dass das Lumineszenz-Konversionsmaterial auf definierte Stellen der Seitenwände aufgebracht ist. Auf diese Weise ist eine besonders definierte Konversion der durch das optische Element tretenden elektromagnetischen Strahlung möglich.

Gemäß zumindest einer Ausführungsform ist es möglich, dass die Leuchtdiode auch Leuchtdiodenchips enthält, die Strahlung unterschiedlicher Wellenlänge emittieren. Bevorzugt mischt sich diese Strahlung dann zu weißem Licht. Beispielsweise kann die Leuchtdiode wenigstens einen Leuchtdiodenchip enthalten, der geeignet ist, Licht im roten Spektralbereich zu emittieren, wenigstens einen Leuchtdiodenchip, der geeignet ist, Licht im grünen Spektralbereich zu emittieren und wenigstens einen Leuchtdiodenchip, der geeignet ist, Licht im blauen Spektralbereich zu emittieren. Zur Verbesserung des Farbwiedergabewerts kann die Leuchtdiode zusätzlich Leuchtdiodenchips aufweisen, die geeignet sind, Licht in anderen Spektralbereichen - zum Beispiel im gelben Spektralbereich - zu emittieren.

Es weist das Kfz-Scheinwerferelement außerdem wenigstens eine weitere Leuchtdiode auf, die geeignet ist, elektromagnetische Strahlung im nicht-sichtbaren Spektralbereich zu emittieren. Es ist die weitere Leuchtdiode geeignet Strahlung im infraroten Spektralbereich zu emittieren. Dazu enthält die weitere Leuchtdiode wenigstens einen Leuchtdiodenchip, der geeignet ist, Strahlung im infraroten Spektralbereich zu emittieren. Das Kfz-Scheinwerferelement eignet sich dann beispielsweise als Beleuchtungseinrichtung des Verkehrsraums in Verbindung mit infrarotempfindlichen Kameras. Derartige Systeme können in Nachtsichtsystemen, Sensoriksystemen für Fußgängerschutz oder Abstandssensorik für Kraftfahrzeuge eingesetzt werden. Die Beleuchtung mit einer infraroten Strahlungsquelle bietet hierbei insbesondere den Vorteil, auch bei höherer Strahlungsleistung keine Verkehrsteilnehmer zu blenden.

In wenigstens einer Ausführungsform des Kfz-Scheinwerferelements weist wenigstens einer der Leuchtdiodenchips der Leuchtdiode eine Strahlungsauskoppelfläche auf, durch die ein Großteil der vom Leuchtdiodenchip emittierten elektromagnetischen Strahlung ausgekoppelt wird. Besonders bevorzugt tritt die gesamte vom Leuchtdiodechip emittierte Strahlung durch die Strahlungsauskoppelfläche aus.

Die Strahlungsauskoppelfläche ist beispielsweise durch einen Teil der Oberfläche des Leuchtdiodenchips gegeben. Bevorzugt ist die Strahlungsauskoppelfläche durch eine Hauptfläche des Leuchtdiodenchips gegeben, die beispielsweise parallel zu einer Epitaxie-Schichtfolge des Leuchtdiodenchips angeordnet ist, welche geeignet ist, elektromagnetische Strahlung zu erzeugen.

Dazu kann die Epitaxie-Schichtfolge beispielsweise einen pn-Übergang, eine Doppelheterostruktur, eine Einfachquantentopf- oder besonders bevorzugt eine Mehrfach-Quantentopfstruktur aufweisen.

Die Bezeichnung Quantentopfstruktur umfasst im Rahmen der Anmeldung jegliche Struktur, bei der Ladungsträger durch Einschluss ("confinement") eine Quantisierung ihrer Energiezustände erfahren. Insbesondere beinhaltet die Bezeichnung Quantentopfstruktur keine Angabe über die Dimensionalität der Quantisierung. Sie umfasst somit unter anderem Quantentröge, Quantendrähte und Quantenpunkte und jede Kombination dieser Strukturen.

Bevorzugt handelt es sich bei dem Leuchtdiodenchip um einen Halbleiter-Leuchtdiodenchip, bei dem das Aufwachssubstrat zumindest teilweise entfernt ist und auf dessen dem ursprünglichen Aufwachssubstrat abgewandte Oberfläche ein Trägerelement aufgebracht ist. Das Trägerelement kann verglichen mit einem Aufwachssubstrat relativ frei gewählt werden. Bevorzugt wird ein Trägerelement gewählt, das hinsichtlich seines Temperaturausdehnungskoeffizienten besonders gut an die strahlungserzeugende Epitaxie-Schichtfolge angepasst ist. Weiter kann das Trägerelement ein Material enthalten, das besonders gut wärmeleitend ist.

Solche durch das Entfernen des Aufwachssubstrats hergestellten Leuchtdiodenchips, werden oftmals als Dünnfilm-Leuchtdiodenchips bezeichnet und zeichnen sich bevorzugt durch die folgenden Merkmale aus:

-   An einer zur Trägerseite hingewandten ersten Hauptfläche der strahlungserzeugenden Epitaxie-Schichtfolge ist eine reflektierende Schicht oder Schichtenfolge aufgebracht oder ausgebildet, die zumindest einen Teil der in der Epitaxie-Schichtfolge erzeugten elektromagnetischen Strahlung in diese zurück reflektiert.
-   Die Epitaxie-Schichtfolge weist bevorzugt eine Dicke von maximal 20 μm, besonders bevorzugt von maximal 10 μm auf.
-   Weiter enthält die Epitaxie-Schichtfolge bevorzugt mindestens eine Halbleiterschicht mit zumindest einer Fläche, die eine Durchmischungsstruktur aufweist. Im Idealfall führt diese Durchmischungsstruktur zu einer annähernd ergodischen Verteilung des Lichts in der Epitaxie-Schichtfolge, d. h. sie weist ein möglichst ergodisch, stochastisches Streuverhalten auf.

Ein Grundprinzip eines Dünnfilm-Leuchtdiodenchips ist beispielsweise in der Druckschrift I. Schnitzer et al., Appl. Phys. Lett. 63 (16), 18. Oktober 1993, 2174 - 2176 beschrieben.

Bevorzugt sind alle Leuchtdiodenchips des Kfz-Scheinwerferelements Dünnfilm-Leuchtdiodenchips. Im Folgenden wird das hier beschriebene Kfz-Scheinwerferelement anhand von Ausführungsbeispielen und den dazugehörigen Figuren näher erläutert. In den Ausführungsbeispielen und Figuren sind gleiche oder gleich wirkende Bestandteile jeweils mit den gleichen Bezugszeichen versehen. Die dargestellten Elemente sind nicht als maßstabsgerecht anzusehen, vielmehr können einzelne Elemente zum besseren Verständnis übertrieben groß dargestellt sein.

Figur 1 zeigt eine schematische Schnittdarstellung einer Leuchtdiode mit Leuchtdiodenoptik gemäß eines ersten Ausführungsbeispiels der Leuchtdiode.

Figur 2 zeigt eine schematische Skizze zur Erläuterung der Funktionsweise eines nicht abbildenden optischen Konzentrators.

Figur 3 zeigt eine Schnittdarstellung einer Leuchtdiodenoptik gemäß eines zweiten Ausführungsbeispiels der Leuchtdiode.

Figur 4A zeigt eine schematische Aufsicht auf ein Ausführungsbeispiel des hier beschriebenen Kfz-Scheinwerferelements.

Figur 4B zeigt eine perspektivische Ansicht einer Abwandlung des hier beschriebenen Kfz-Scheinwerferelements.

Figur 5 zeigt eine schematische Seitenansicht eines Ausführungsbeispiels eines Kfz-Scheinwerfers mit dem hier beschriebenen Kfz-Scheinwerferelement.

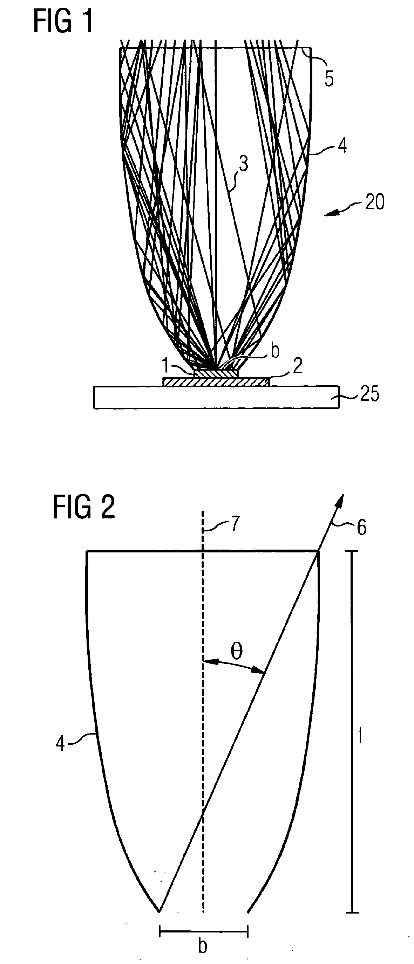

Figur 1 zeigt eine schematische Schnittdarstellung einer Leuchtdiode 20 mit einer Leuchtdiodenoptik 4 gemäß eines ersten Ausführungsbeispiels der Leuchtdiode 20.

Der Leuchtdiodenchip 1 ist hier in einem Gehäuse 2 angeordnet. Das Gehäuse 2 kann beispielsweise ein keramisches Material enthalten. Zum Beispiel weist das Gehäuse 2 Durchkontaktierungen zur Kontaktierung des Leuchtdiodenchips 1 auf. Im gezeigten Ausführungsbeispiel ist das Gehäuse 2 auf eine Leiterplatte 25 aufgebracht. Die Leiterplatte 25 weist beispielsweise Leiterbahnen und Kontaktstellen zur Kontaktierung des Leuchtdiodenchips 1 auf.

Der Leuchtdiodenchip 1 ist beispielsweise ein Dünnfilm-Leuchtdiodenchip, wie er im allgemeinen Teil der Beschreibung erläutert ist.

Dem Leuchtdiodenchip 1 ist eine Leuchtdiodenoptik 4 nachgeordnet, bei der es sich beispielsweise um einen dreidimensionalen CPC-artigen, nicht abbildenden optischen Konzentrator handeln kann. Die Leuchtdiodenoptik 4 weist eine Lichteingangsöffnung b auf, durch die vom Leuchtdiodenchip 1 emittierte elektromagnetische Strahlung 3 treten kann. Die elektromagnetische Strahlung 3 wird zumindest teilweise an den Seitenwänden der Leuchtdiodenoptik 4 reflektiert, die dazu beispielsweise mit einer reflektierenden Beschichtung versehen sind. Die Strahlung 3 verlässt die Leuchtdiodenoptik durch die Strahlungsaustrittsöffnung 5.

Je näher die Strahlungseintrittsöffnung b der Leuchtdiodenoptik 4 an die Strahlungsauskoppelfläche des Leuchtdiodenchips 1 gebracht wird, desto kleiner kann die Strahlungseintrittsöffnung b gestaltet sein und desto höher ist die Strahldichte (Etendue) der durch die Strahlungsaustrittsöffnung 5 austretenden elektromagnetischen Strahlung 3. Leuchtdiodenoptik 4 und Leuchtdiodenchip 1 bilden zusammen die Leuchtdiode 20.

Alternativ zum in Figur 1 gezeigten Ausführungsbeispiel ist es möglich, dass mehrere Leuchtdiodenchips beispielsweise entlang einer Geraden im Gehäuse 2 angeordnet sind und diesen Leuchtdiodenchips eine gemeinsame Leuchtdiodenoptik 4 zugeordnet ist.

Figur 2 zeigt, dass der Strahlkegel 6 der durch die Leuchtdiodenoptik 4 tretenden Strahlung die Strahlungsaustrittsöffnung 5 mit einem maximalen Winkel θ zu einer Mittelachse 7 der Leuchtdiodenoptik 4 verlässt. Die Länge 1 der Leuchtdiodenoptik 4 bestimmt dabei bei gegebener Breite der Strahlungseintrittsöffnung b den Winkel θ. Für einen idealen kompakten parabolischen Konzentrator ergibt sich beispielsweise folgender Zusammenhang:

$$l = \frac{b}{2}(1 + \sin\theta)\frac{\cos\theta}{\sin^2\theta}.$$

Um einen maximalen Öffnungswinkel von beispielsweise θ= 9° zu erreichen, muss die Länge 1 der Leuchtdiodenoptik etwa 23 Mal so groß wie die Breite der Strahlungseintrittsöffnung b sein.

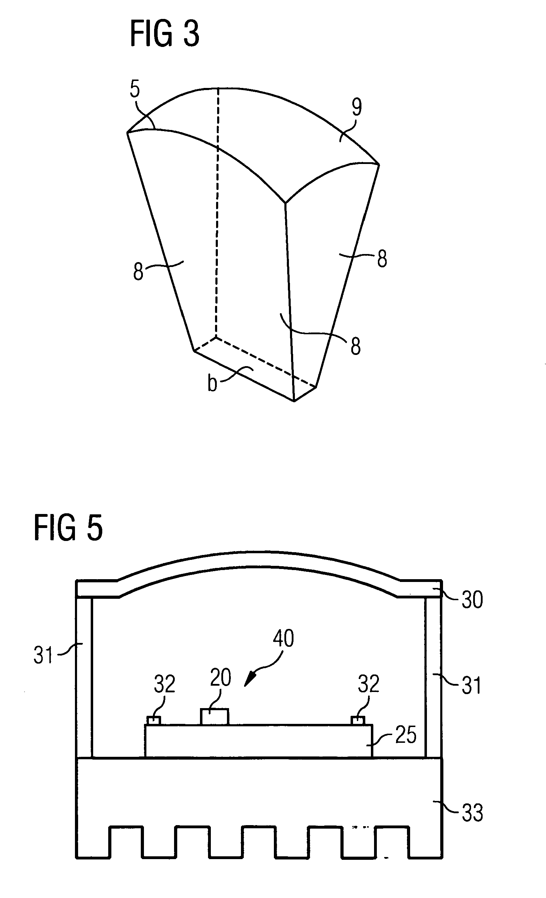

Figur 3 zeigt, dass alternativ zu einem CPC-artigen optischen Konzentrator die Leuchtdiodenoptik auch Seitenwände 8 aufweisen kann, die in geraden Linien von der Strahlungseintrittsöffnung b zur Strahlungsaustrittsöffnung 5 verlaufen. Dabei kann die Leuchtdiodenoptik 4 ein Vollkörper aus einem dielektrischen Material sein, der eine kegelstumpf- oder pyramidenstumpfartige Grundform aufweist. Zusätzlich kann die Strahlungsaustrittsöffnung 5 nach Art einer sphärischen oder asphärischen Linse nach außen gewölbt sein, die eine zusätzliche Leuchtdiodenoptik 9 bildet, welche integraler Teil der Leuchtdiodenoptik ist, und geeignet ist, die Divergenz der durch das optische Element 4 tretenden Strahlung 3 zu verringern.

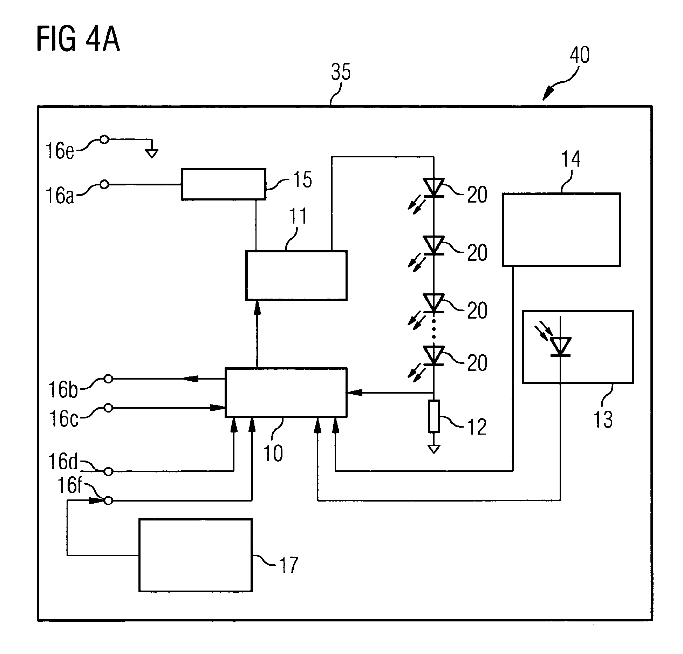

Figur 4A zeigt eine schematische Aufsicht auf ein Ausführungsbeispiel des hier beschriebenen Kfz-Scheinwerferelements 40.

Mehrere Leuchtdioden 20 sind hier auf einem Träger 25 angeordnet. Bei dem Träger 25 handelt es sich beispielsweise um eine Leiterplatte, z. B. um eine Metallkernplatine. Der Träger 25 kann zum Beispiel eine Grundfläche von höchstens 30mm x 60mm, bevorzugt von höchstens 20mm x 40mm, besonders bevorzugt von höchstens 15mm x 30mm aufweisen.

Den Leuchtdioden 20 ist ein Shunt-Widerstand 12 in Reihe geschaltet. Mittels des Spannungsabfalls am Widerstand 12 kann die Steuervorrichtung 10 den Strom, der durch die Leuchtdioden 20 fließt, ermitteln. Beispielsweise kann die Steuervorrichtung 10 eine Integrationsschaltung zur Ermittlung des Stroms durch die Leuchtdioden 20 enthalten.

Der Strom durch die Leuchtdioden 20 wird von der Steuervorrichtung 10 beispielsweise gemäß einem Soll-Stromwerts eingestellt. Der Soll-Stromwert kann der Steuervorrichtung 10 durch ein externes elektrisches Signal vorgegeben sein. Das externe Signal ist beispielsweise mittels des Anschlussstifts 16d der Steuervorrichtung 10 zugeführt.

Die Leuchtdioden 20 werden bestromt, falls der Steuervorrichtung 10 ein entsprechendes Schaltsignal (Enable-Signal) zugeführt ist. Das Schaltsignal kann der Steuervorrichtung 10 zum Beispiel mittels eines Anschlussstifts 16c zugeführt sein.

Weiter kann der Steuervorrichtung 10 von außen das Signal eines externen Photodetektors 17 mittels des Anschlussstifts 16f zugeführt sein. Die Leuchtdioden 20 werden dann von der Steuervorrichtung 10 abhängig von der Umgebungshelligkeit bestromt.

In Abhängigkeit von internen Messgrößen, die im wesentlichen durch den Betriebszustand der Leuchtdioden 20 bestimmt sind, können der Steuervorrichtung 10 Signale eines Photodetektors 13 und eines Temperatursensors 14 zugeführt sein.

Der Temperatursensor 14 ist bevorzugt geeignet, ein von der Temperatur der Leuchtdioden 20 abhängiges Signal zu erzeugen.

Das Signal des Temperatursensors 14 wird zur Steuervorrichtung 10 geleitet und von dieser verarbeitet. Abhängig vom Signal regelt die Steuervorrichtung 10 dann den Strom durch die Leuchtdioden 20. Ist die Temperatur der Leuchtdioden 20 beispielsweise zu hoch, so kann der durch die Leuchtdioden 20 fließende Strom von der Steuervorrichtung 10 reduziert werden.

Der interne Photodetektor 13 ermittelt die Intensität der von den Leuchtdioden 20 abgegebenen elektromagnetischen Strahlung 20. Das Signal des Photodetektors 13 wird zur Steuervorrichtung 10 geleitet. Lässt die Intensität der Leuchtdioden 20 beispielsweise aufgrund von Alterungserscheinungen nach, so kann der Strom durch die Leuchtdioden 20 mit Hilfe der Steuervorrichtung 10 entsprechend nachgeregelt werden.

Bevorzugt sind sowohl Temperatursensor 14 als auch Photodetektor 13 auf dem Träger 25 befestigt. Der Temperatursensor kann beispielsweise mittels Wärmeleitung mittels des Trägers 25 thermisch an die Leuchtdioden 20 gekoppelt sein. Der Träger 25 dient dann als Wärmeleitelement. Weiter sind sie mittels Leiterbahnen des Trägers 25 mit der Steuervorrichtung 10 elektrisch verbunden.

Im Fehlerfall, beispielsweise beim Ausfall einer Leuchtdiode oder Überhitzen der Leuchtdiode, kann von der Steuervorrichtung 10 ein entsprechendes Fehlersignal an den Anschlussstift 16b abgegeben werden.

Weiter ist die Steuervorrichtung 10 geeignet an einer regelbaren Spannungsversorgung 11 ein entsprechendes Tastverhältnis einzustellen. Auf diese Weise kann die Steuervorrichtung 10 den Strom durch die Leuchtdioden 20 regeln.

Zur Verarbeitung der in die Steuervorrichtung 10 eingehenden Signale kann die Steuervorrichtung 10 zum Beispiel einen Mikroprozessor aufweisen. Zum Beispiel kann es sich bei der Steuervorrichtung 10 um einen Mikrokontroller handeln.

Bei der regelbaren Spannungsversorgung 11 handelt es sich beispielsweise um einen DC-DC-Wandler, der mit einer Frequenz von 100-500 kHz betrieben werden kann.

Die regelbare Spannungsversorgung 11 ist geeignet, eine Eingangsspannung, die beispielsweise am Anschlussstift 16a anliegt, in eine zum Betrieb der Leuchtdioden 20 geeignete Spannung umzuwandeln.

Über den Anschlussstift 16e ist das Kfz-Scheinwerferelement geerdet.

An sämtlichen Anschlussstiften 16a bis 16f kann zum Beispiel als Schutz gegen Überspannungen ein Varistor (nicht dargestellt) auf Masse geschaltet sein.

Weiter kann den Anschlussstiften 16a bis 16f wie am Beispiel des Anschlussstiftes 16a gezeigt ein Pi-Filter, der einen Kondensator und eine Induktivität enthalten kann, in Reihe geschaltet sein. Der Pi-Filter dient zum Beispiel zur Funkenentstörung.

Weiter kann wenigstens ein Anschlussstift (nicht dargestellt) auf dem Träger 25 angeordnet sein, der eine Kommunikationsschnittstelle zum Beispiel einen LIN-Bus bildet.

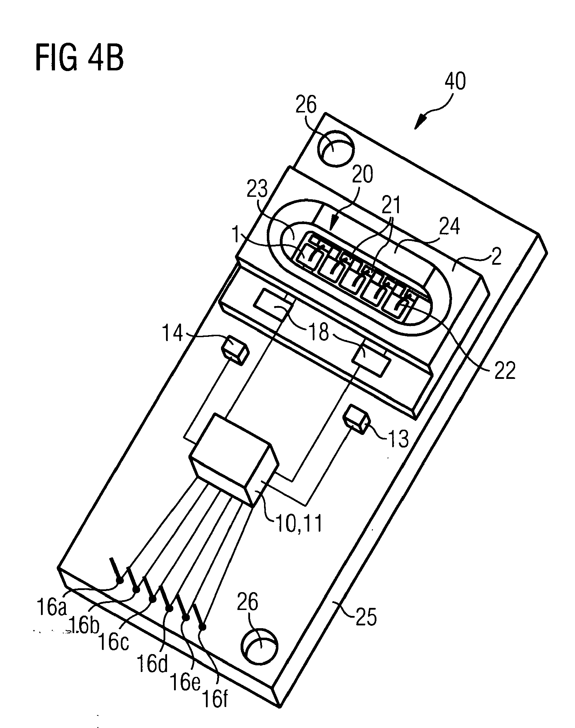

Figur 4B zeigt eine perspektivische Darstellung einer Abwandlung des hier beschriebenen Kfz-Scheinwerferelements 40. In dieser Abwandlung ist eine Leuchtdiode 20 auf einer Metallkernplatine angeordnet, die als Träger 25 fungiert.

Die Leuchtdiode 20 umfasst beispielsweise fünf Leuchtdiodenchips 1. Die Leuchtdiodenchips 1 sind beispielsweise auf dem Boden 23 eines Gehäuses 2 angeordnet. Das Gehäuse 2 enthält beispielsweise ein keramisches Material. Das Gehäuse 2 kann Innenwände aufweisen, die nach Art eines nicht abbildenden optischen Konzentrators geformt sind. Bevorzugt sind die Innenwände 24 des Gehäuses 2 zumindest stellenweise reflektierend ausgebildet. Den Innenwänden 24 kann in Hauptabstrahlrichtung der Leuchtdiodenchips 1 eine Leuchtdiodenoptik nachfolgen (nicht dargestellt), wie sie weiter oben beschrieben ist. Die Leuchtdiodenchips 1 sind mittels Bonddrähten 22 mit inneren Kontaktflächen 21 kontaktiert. Die inneren Kontaktflächen sind elektrisch leitend mit äußeren Kontaktflächen 18 verbunden, über die die Leuchtdiode elektrisch kontaktiert werden kann.

Der Träger 25 kann zudem Passbohrungen 26 aufweisen, mittels derer das Kfz-Scheinwerferelement beispielsweise zu einem weiteren Träger 33 justiert werden kann.

Figur 5 zeigt eine schematische Schnittdarstellung eines Scheinwerfers mit den hier beschriebenen Scheinwerferelementen 40.

Mehrere Kfz-Scheinwerferelemente 40, wie in der Figur 4A beschrieben, können hier auf einen weiteren Träger 33 montiert sein. Beispielsweise sind drei Kfz-Scheinwerferelemente 40 auf dem weiteren Träger 33 befestigt. Der weitere Träger 33 dient vorzugsweise auch als Kühlkörper für die im Betrieb von den Leuchtdioden 20 erzeugte Wärme. Beispielsweise weist der weitere Träger 33 dazu an seiner den Kfz-Scheinwerferelementen 40 abgewandten Oberfläche Kühlrippen auf. Der weitere Träger 33 enthält bevorzugt ein gut wärmeleitendes Metall wie beispielsweise Kupfer.

Die Kfz-Scheinwerferelemente 40 und der weitere Träger 33 können mittels Passstiften 32 zueinander justiert sein. Auf diese Weise sind auch die Kfz-Scheinwerferelemente 40 zueinander justiert. Bei den Passstiften 32 kann es sich um separate Bauteile handeln. Der weitere Träger 33 und die Kfz-Scheinwerferelemente 40 weisen dann Ausnehmungen, beispielsweise Passbohrungen, auf. Die Passbohrungen an dem weiteren Träger 33 und dem Kfz-Scheinwerferelement 40 weisen einen geeigneten Durchmesser auf, sodass die Passstifte 32 bündig in die Passbohrungen greifen.

Zudem ist es möglich, dass die Passstifte 32 integraler Bestandteil des weiteren Trägers 33 sind. Das heißt, die Passstifte sind mechanisch fest mit dem weiteren Träger 33 verbunden. Dies kann beispielsweise schon bei der Herstellung des weiteren Trägers 33 geschehen. Die Leiterplatte 25 des Kfz-Scheinwerferelements 40 weist dann Ausnehmungen 26 auf, die zur Aufnahme dieser Passstifte geeignet sind.

Ebenso ist es möglich, dass die Passstifte 32 integraler Bestandteil des Kfz-Scheinwerferelements 40 sind. Im weiteren Träger 33 sind dann Ausnehmungen zur Aufnahme dieser Passstifte vorgesehen.

Weiter ist es möglich, dass der weitere Träger 33 und die Kfz-Scheinwerferelemente 40 mittels Passmarken zueinander justiert sind. Die Ausrichtung der Kfz-Scheinwerferelemente 40 zum weiteren Träger 33 und damit auch die Ausrichtung der Kfz-Scheinwerferelemente 40 zueinander kann dann beispielsweise über ein Bildverarbeitungssystem erfolgen. Passmarken befinden sich dazu z. B. auf der Leiterplatte 25 des Kfz-Scheinwerferelements 40. Die Passmarken können von einer Kamera erfasst werden und auf einen Bezugspunkt, der sich auf den Träger 33 befindet, ausgerichtet werden. Bei dem Bezugspunkt kann es sich um eine weitere Passmarke handeln.

Die Passmarken auf dem weiteren Träger 33 und dem Kfz-Scheinwerferelement 40 sind entweder durch Markierungen oder durch bestimmte Bauelemente der Bauteile des Scheinwerfers gegeben. Beispielsweise können bestimmte Leuchtdiodenchips 1 der Leuchtdiode 20 solche Passmarken darstellen.

Den Kfz-Scheinwerferelementen 40 ist zum Beispiel ein gemeinsames optisches Element 30 nachgeordnet. Das optische Element 30 ist beispielsweise eine diffraktive oder refraktive Linse, die allen Kfz-Scheinwerferelementen 40 des Scheinwerfers nachgeordnet ist, sodass das von allen Leuchtdioden 20 emittierte Licht durch das optische Element 30 beeinflusst wird.

Das optische Element 30 und der weitere Träger 33 sind mittels Passstiften 31 zueinander justiert. Auf diese Weise sind auch die Kfz-Scheinwerferelemente 40 und das optische Element 30 zueinander justiert.

Die Passstifte können separate Bauteile sein. Es ist aber auch möglich, dass die Passstifte integraler Bestandteil des weiteren Trägers 33 oder des optischen Elements 30 sind. Das jeweils andere Bauteil weist dann Ausnehmungen - z.B. Passbohrungen - auf, die zur Aufnahme der Passstifte geeignet sind.

Vorzugsweise nach der Justage von Leuchtdioden 20 und Träger 33 und der Justage von optischem Element 30 und weiterem Träger 33 zueinander werden die Kfz-Scheinwerferelemente 40 mechanisch fest mit dem Träger verbunden. Beispielsweise können die Kfz-Scheinwerferelemente 40 mit dem weiteren Träger 33 verklebt, verschraubt oder verstemmt sein. Auch das optische Element 30 wird vorzugsweise nach dem Justagevorgang mechanisch fest mit dem weiteren Träger 33 verbunden.

**Patentansprüche**

1. Kfz-Scheinwerferelement, aufweisend

   - wenigstens eine erste Leuchtdiode (20) mit mindestens einem Leuchtdiodenchip (1),
   - ein Lumineszenz-Konversionsmaterial, das einer Strahlungsauskoppelfläche des Leuchtdiodenchips (1) oder wenigstens einer der Leuchtdiodenchips (1) der ersten Leuchtdiode (20) nachgeordnet ist und das dazu geeignet ist, wenigstens einen Teil der vom Leuchtdiodenchip (1) ausgesandten elektromagnetischen Strahlung zu wellenlängenkonvertieren,
   - wenigstens eine zweite Leuchtdiode (20) mit mindestens einem Leuchtdiodenchip (1), der geeignet ist, Strahlung im infraroten Spektralbereich zu erzeugen,
   - wenigstens eine Steuervorrichtung (10), die geeignet ist, ein von einer Messgröße abhängiges Signal zu verarbeiten und einen Strom entsprechend dem Signal in die erste Leuchtdiode (20) und in die zweite Leuchtdiode (20) einzuprägen,

   wobei die Steuervorrichtung (10), die erste Leuchtdiode (20) und die zweite Leuchtdiode (20) auf einem gemeinsamen Träger (25) angeordnet sind, und wobei das Kfz-Scheinwerferelement dazu geeignet ist, weißes Licht zu emittieren.

2. Kfz-Scheinwerferelement nach dem vorhergehenden Anspruch, bei dem durch die erste Leuchtdiode (20) mittels des Lumineszenz-Konversionsmaterials weißes Licht erzeugt wird, und bei dem die zweite Leuchtdiode (20) dazu geeignet ist, Strahlung im infraroten Spektralbereich zu emittieren und zu einer Verkehrsraumbeleuchtung in Verbindung mit infrarotempfindlichen Kameras zu dienen.

3. Kfz-Scheinwerferelement nach einem der vorhergehenden Ansprüche, bei dem einem Leuchtdiodenchip (1) der ersten Leuchtdiode (20) eine Leuchtdiodenoptik (4) nachgeordnet ist, wobei die Leuchtdiodenoptik (4) zur Verringerung der Divergenz der vom Leuchtdiodenchip (1) emittierten elektromagnetischen Strahlung geeignet ist.

4. Kfz-Scheinwerferelement nach dem vorhergehenden Anspruch, bei dem die erste Leuchtdiode (20) mehrere Leuchtdiodenchips (1) enthält und bei dem den Leuchtdiodenchips (1) der Leuchtdiode (20) eine gemeinsame Leuchtdiodenoptik (4) nachgeordnet ist.

5. Kfz-Scheinwerferelement nach einem der Ansprüche 3 oder 4, bei dem die Leuchtdiodenoptik (4) zumindest teilweise nach Art wenigstens eines der folgenden optischen Elemente gebildet ist: CPC, CEC, CHC, Pyramidenstumpf, Kegelstumpf.

6. Kfz-Scheinwerferelement nach dem vorhergehenden Anspruch, bei dem die Leuchtdiodenoptik (4) reflektierende Seitenflächen aufweist.

7. Kfz-Scheinwerferelement nach einem der Ansprüche 3 bis 6, bei dem das Lumineszenz-Konversionsmaterial zumindest stellenweise in der Leuchtdiodenoptik (4) enthalten ist.

8. Kfz-Scheinwerferelement nach einem der Ansprüche 6 oder 7, bei dem das Lumineszenz-Konversionsmaterial als dünne Schicht auf die Seitenwände der Leuchtdiodenoptik (4), die der Strahlungsauskoppelfläche des Leuchtdiodenchips (1) nachgeordnet sind, aufgebracht ist.

9. Kfz-Scheinwerferelement nach einem der Ansprüche 3 bis 8, bei dem die Leuchtdiodenoptik (4) eine Strahlungseingangsöffnung (b) aufweist, die maximal zweimal so groß ist wie die Gesamtstrahlungsauskoppelfläche der dem optischen Element zugeordneten Leuchtdiodenchips (1).

10. Kfz-Scheinwerferelement nach dem einem der vorhergehenden Ansprüche,
bei dem die Steuervorrichtung (10) geeignet ist, den Strom in die erste Leuchtdiode (20) abhängig vom Signal eines Temperatursensors (14) einzuprägen, wobei der Temperatursensor (14) thermisch an die erste Leuchtdiode (20) gekoppelt und auf dem Träger (25) angeordnet ist.

11. Kfz-Scheinwerferelement nach einem der vorhergehenden Ansprüche,
bei dem die Steuervorrichtung (10) geeignet ist, den Strom in die erste Leuchtdiode (20) abhängig vom Signal eines Photodetektors (13) einzuprägen, wobei der Photodetektor (13) auf dem Träger (25) angeordnet und dazu geeignet ist, im wesentlichen die von der Leuchtdiode (10) abgegebene elektromagnetische Strahlung zu detektieren.

12. Kfz-Scheinwerferelement nach einem der vorhergehenden Ansprüche,
bei dem die Steuervorrichtung (10) geeignet ist, den Strom in die erste Leuchtdiode (20) abhängig vom Signal eines Photodetektors (17) einzuprägen, wobei der Photodetektor (17) außerhalb des Scheinwerfers angeordnet und dazu geeignet ist, im wesentlichen die Umgebungshelligkeit zu detektieren.

13. Kfz-Scheinwerferelement nach einem der vorhergehenden Ansprüche,
bei dem eine Pulsweitenmodulationsschaltung auf dem Träger (25) angeordnet ist, wobei die Pulsweitenmodulationsschaltung dazu geeignet ist, die erste Leuchtdiode (20) zu dimmen und bei dem weiterhin die Steuervorrichtung (10) dazu geeignet ist, ein Tastverhältnis der Pulsweitenmodulationsschaltung einzustellen.

14. Kfz-Scheinwerferelement nach einem der vorhergehenden Ansprüche,
bei dem die Leuchtdiodenchips (1) der ersten Leuchtdiode (20) elektrisch in Serie geschaltet sind und bei dem eine regelbare Spannungsversorgung (11) auf dem Träger angeordnet ist, wobei die Spannungsversorgung (11) dazu geeignet ist, die erste Leuchtdiode (20) mit einer Spannung zwischen 1 V und 5 V pro Leuchtdiodenchip (1) zu betreiben.

15. Kfz-Scheinwerferelement nach einem der vorhergehenden Ansprüche,
bei dem wenigstens ein Anschlussstift (16a-16f) auf dem Träger (25) angeordnet ist, wobei wenigstens einem Anschlussstift (16a-16f) und der ersten Leuchtdiode (20) ein Varistor parallel geschaltet ist.

## Claims

1. An automotive headlight element, comprising

   - at least one first light-emitting diode (20) with at least one light-emitting diode chip (1),
   - a luminescence conversion material, which is arranged downstream of a radiation outcoupling face of the light-emitting diode chip (1) or at least one of the light-emitting diode chips (1) of the first light-emitting diode (20) and which is suitable for wavelength conversion of at least part of the electromagnetic radiation emitted by the light-emitting diode chip (1),
   - at least one second light-emitting diode (20) with at least one light-emitting diode chip (1) which is suitable for generating radiation in the infrared spectral range,
   - at least one control device (10), which is suitable for processing a signal dependent on a measured variable and injecting current corresponding to the signal into the first light-emitting diode (20) and into the second light-emitting diode (20),

   the control device (10), the first light-emitting diode (20) and the second light-emitting diode (20) being arranged on a common carrier (25),
   and the automotive headlight element being suitable for emitting white light.

2. An automotive headlight element according to the preceding claim,
in which white light is generated by the first light-emitting diode (20) by means of the luminescence conversion material, and in which the second light-emitting diode (20) is suitable for emitting radiation in the infrared spectral range and assisting in illuminating the surrounding area in conjunction with infrared-sensitive cameras.

3. An automotive headlight element according to one of the preceding claims,
in which a light-emitting diode optical system (4) is arranged downstream of a light-emitting diode chip (1) of the first light-emitting diode (20), the light-emitting diode optical system (4) being suitable for reducing the divergence of the electromagnetic radiation emitted by the light-emitting diode chip (1).

**4.** An automotive headlight element according to the preceding claim,
in which the first light-emitting diode (20) contains a plurality of light-emitting diode chips (1) and in which a common light-emitting diode optical system (4) is arranged downstream of the light-emitting diode chips (1) of the light-emitting diode (20).

**5.** An automotive headlight element according to one of claims 3 or 4,
in which the light-emitting diode optical system (4) is formed at least in part in the manner of at least one of the following optical elements: CPC, CEC, CHC, truncated pyramid, truncated cone.

**6.** An automotive headlight element according to the preceding claim,
in which the light-emitting diode optical system (4) comprises reflective side faces.

**7.** An automotive headlight element according to one of claims 3 to 6,
in which the luminescence conversion material is contained at least in places in the light-emitting diode optical system (4).

**8.** An automotive headlight element according to one of claims 6 or 7,
in which the luminescence conversion material is applied as a thin layer to the side walls of the light-emitting diode optical system (4), which are arranged downstream of the radiation outcoupling face of the light-emitting diode chip (1).

**9.** An automotive headlight element according to one of claims 3 to 8,
in which the light-emitting diode optical system (4) comprises a radiation inlet aperture (b) which is at most twice as large as the total radiation outcoupling area of the light-emitting diode chip (1) associated with the optical element.

**10.** An automotive headlight element according to one of the preceding claims,
in which the control device (10) is suitable for injecting the current into the first light-emitting diode (20) as a function of the signal of a temperature sensor (14), the temperature sensor (14) being thermally coupled to the first light-emitting diode (20) and being arranged on the carrier (25).

**11.** An automotive headlight element according to one of the preceding claims,
in which the control device (10) is suitable for injecting the current into the first light-emitting diode (20) as a function of the signal of a photodetector (13), the photodetector (13) being arranged on the carrier (25) and being substantially suitable for detecting the electromagnetic radiation output by the light-emitting diode (10).

**12.** An automotive headlight element according to one of the preceding claims,
in which the control device (10) is suitable for injecting the current into the first light-emitting diode (20) as a function of the signal of a photodetector (17), the photodetector (17) being arranged outside the headlight and being substantially suitable for detecting the ambient luminosity.

**13.** An automotive headlight element according to one of the preceding claims,
in which a pulse width modulation circuit is arranged on the carrier (25), the pulse width modulation circuit being suitable for dimming the first light-emitting diode (20), and in which moreover the control device (10) is suitable for adjusting a pulse duty factor of the pulse width modulation circuit.

**14.** An automotive headlight element according to one of the preceding claims,
in which the light-emitting diode chips (1) of the first light-emitting diode (20) are connected electrically in series and in which an adjustable power supply (11) is arranged on the carrier, the power supply (11) being suitable for operating the first light-emitting diode (20) with a voltage of between 1 V and 5 V per light-emitting diode chip (1).

**15.** An automotive headlight element according to one of the preceding claims,
in which at least one terminal pin (16a-16f) is arranged on the carrier (25), a varistor being connected in parallel to at least one terminal pin (16a-16f) and the first light-emitting diode (20).

**Revendications**

**1.** Elément de phare de véhicule automobile présentant

    - au moins une première diode électroluminescente (20) munie d'au moins une puce de diode électroluminescente (1),
    - une matière de conversion de luminescence qui est disposée en aval d'une surface de découplage du rayonnement de la puce de diode électroluminescente (1) ou d'au moins une des puces de diode électroluminescente (1) de la première diode électroluminescente (20) et qui est apte à convertir en longueur d'onde au moins une partie du rayonnement électromagnétique émis par la puce de diode électroluminescente (1),

- au moins une deuxième diode électroluminescente (20) munie d'au moins une puce de diode électroluminescente (1) qui est apte à générer un rayonnement dans le domaine spectral infrarouge,

- au moins un dispositif de commande (10) qui est apte à traiter un signal dépendant d'une valeur de mesure et à appliquer un courant correspondant au signal dans la première diode électroluminescente (20) et dans la deuxième diode électroluminescente (20),

le dispositif de commande (10), la première diode électroluminescente (20) et la deuxième diode électroluminescente (20) étant disposés sur un support commun (25),

et l'élément de phare de véhicule automobile étant apte à émettre de la lumière blanche.

2. Elément de phare de véhicule automobile selon la revendication précédente, dans lequel de la lumière blanche est générée par la première diode électroluminescente (20) au moyen de la matière de conversion de luminescence, et dans lequel la deuxième diode électroluminescente (20) est apte à émettre un rayonnement dans le domaine spectral infrarouge et à servir à un éclairage d'un espace de circulation en relation avec des caméras sensibles aux infrarouges.

3. Elément de phare de véhicule automobile selon l'une quelconque des revendications précédentes, dans lequel une optique de diode électroluminescente (4) est disposée en aval d'une puce de diode électroluminescente (1) de la première diode électroluminescente (20), l'optique de diode électroluminescente (4) étant apte à diminuer la divergence du rayonnement électromagnétique émis par la puce de diode électroluminescente (1).

4. Elément de phare de véhicule automobile selon la revendication précédente, dans lequel la première diode électroluminescente (20) comprend plusieurs puces de diode électroluminescente (1) et dans lequel une optique de diode électroluminescente commune (4) est disposée en aval des puces de diode luminescente (1) de la diode électroluminescente (20).

5. Elément de phare de véhicule automobile selon l'une quelconque des revendications 3 ou 4, dans lequel l'optique de diode électroluminescente (4) est formée, du moins en partie, à la manière d'au moins l'un des éléments optiques suivants : CPC, CEC, CHC, pyramide tronquée, cône tronqué.

6. Elément de phare de véhicule automobile selon la revendication précédente, dans lequel l'optique de diode électroluminescente (4) présente des surfaces latérales réfléchissantes.

7. Elément de phare de véhicule automobile selon l'une quelconque des revendications 3 à 6, dans lequel la matière de conversion de luminescence est comprise au moins par endroits dans l'optique de diode électroluminescente (4).

8. Elément de phare de véhicule automobile selon l'une quelconque des revendications 6 ou 7, dans lequel la matière de conversion de luminescence est appliquée en tant que mince couche sur les parois latérales de l'optique de diode électroluminescente (4), lesquelles sont disposées en aval de la surface de découplage du rayonnement de la puce de diode électroluminescente (1).

9. Elément de phare de véhicule automobile selon l'une quelconque des revendications 3 à 8, dans lequel l'optique de diode électroluminescente (4) présente une ouverture d'entrée de rayonnement (b) qui est au maximum deux fois plus grande que la surface totale de découplage du rayonnement des puces de diode électroluminescente (1) attribuées à l'élément optique.

10. Elément de phare de véhicule automobile selon l'une quelconque des revendications précédentes, dans lequel le dispositif de commande (10) est apte à appliquer le courant dans la première diode électroluminescente (20) en fonction du signal d'un capteur de température (14), le capteur de température (14) étant couplé thermiquement à la première diode électroluminescente (20) et étant disposé sur le support (25).

11. Elément de phare de véhicule automobile selon l'une quelconque des revendications précédentes, dans lequel le dispositif de commande (10) est apte à appliquer le courant dans la première diode électroluminescente (20) en fonction du signal d'un photodétecteur (13), le photodétecteur (13) étant disposé sur le support (25) et étant apte à essentiellement détecter le rayonnement électromagnétique émis par la diode électroluminescente (10).

12. Elément de phare de véhicule automobile selon l'une quelconque des revendications précédentes, dans lequel le dispositif de commande (10) est apte à appliquer le courant dans la première diode électroluminescente (20) en fonction du signal d'un photodétecteur (17), le photodétecteur (17) étant disposé à l'extérieur du phare et étant apte à essentiellement détecter la clarté des environs.

**13.** Elément de phare de véhicule automobile selon l'une quelconque des revendications précédentes,
dans lequel un circuit de modulation d'impulsions en largeur est disposé sur le support (25), le circuit de modulation d'impulsions en largeur étant apte à atténuer la première diode électroluminescente (20) et dans lequel le dispositif de commande (10) est en outre apte à régler un rapport cyclique du circuit de modulation d'impulsions en largeur.

**14.** Elément de phare de véhicule automobile selon l'une quelconque des revendications précédentes,
dans lequel les puces de diodes électroluminescentes (1) de la première diode électroluminescente (20) sont couplées électriquement en série et dans lequel une alimentation en tension réglable (11) est disposée sur le support, l'alimentation en tension (11) étant apte à faire fonctionner la première diode électroluminescente (20) avec une tension comprise entre 1 V et 5 V par puce de diode électroluminescente (1).

**15.** Elément de phare de véhicule automobile selon l'une quelconque des revendications précédentes,
dans lequel au moins une broche de connexion (16a-16f) est disposée sur le support (25), un varistor étant couplé en parallèle à au moins une broche de connexion (16a-16f) et à la première diode électroluminescente (20).

FIG 1

FIG 2

## FIG 3

## FIG 5

FIG 4A

FIG 4B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0101037 A1
- WO 0101038 A1
- EP 1298007 A2
- US 20040178737 A1
- US 20040233678 A1
- US 6371636 B1
- DE 10313246 A1
- WO 9812757 A1
- WO 9812757 A

**In der Beschreibung aufgeführte Nicht-Patentliteratur**

- **I. Schnitzer et al.** *Appl. Phys. Lett.,* 18. Oktober 1993, vol. 63 (16), 2174-2176